# EUROPEAN PATENT SPECIFICATION

(11) **EP 0 535 836 B1**
(45) Date of publication and mention of the grant of the patent: **30.08.1995**
(21) Application number: 92308554.2
(22) Date of filing: 18.09.1992
(51) Int. Cl.: C02F 1/52, C02F 1/62, C08G 73/02

(54) **Dithiocarbamate polymers**
Dithiocarbamat-gruppen enthaltende Polymere
Polymère contenant des groupes dithiocarbamate

(30) Priority: 02.10.1991 US 769658
(43) Date of publication of application: 07.04.1993
(73) Proprietor: NALCO CHEMICAL COMPANY, Naperville Illinois 60563-1198 (US)
(72) Inventor: Sparapany, John W., Bolingbrook, Illinois 60439 (US); Collins, John H., Bloomingdale, Illinois 60108 (US)
(74) Representative: Harrison, David Christopher

(56) References cited:
- EP-A- 0 200 143
- EP-A- 0 211 305
- EP-A- 0 433 580
- US-A- 4 089 780

## Description

As more problems are caused by contamination of rivers, waterways and the like by waste water from industrial sources, stricter regulations have been enacted to avoid contamination. It is now a mandatory requirement to control metals in waste water below their prescribed concentrations. Particularly stringent regulations have been established for heavy metals harmful to humans, such as mercury, cadium, zinc, copper and chromium.

Various processes have been proposed to remove heavy metal ions in waste water. In one process, heavy metal removal is achieved using simple dithiocarbamates (i.e. dimethyldithiocarbamate, DMDTC). There are several drawbacks to using low molecular weight dithiocarbamates. The precipitate formed can be small and settling or filtering of the precipitate from the waste water can be slow. Separate addition of flocculants and/or coagulants are often required for faster precipitation and filtration.

One proposal for improving the ability of diathiocarbamates to remove metals is to react them with polyethyleneimine polymers. Such a proposal is set forth in European patent application 0090551 A1. The polyethyleneimine polymers described in this patent are water insoluble. While evidencing the ability to chelate undesirable metals, the separation of the chelated metal polymer complex is relatively slow. The action of these materials is believed to be similar to the action of water insoluble ion exchange resins.

Another example of polyethyleneimine-dithiocarbamate polymers is set forth in U.S. 4,670,160. In Example 8 of this patent, a polyethylene imine resin having molecular weight of 60,000 was modified with carbon disulfide. The finished resin, while evidencing some water solubility, contained substantial quantities of insoluble materials.

Experimental data has indicated that while polyethyleneimine resins may be modified with carbon disulfide to produce water soluble resins, the molecular weight must be about 10,000 or less. Also, the amount of carbon disulfide which may be used, e.g., 25 mole % or less.

As will be shown hereafter, the polymeric dithiocarbamate polymers of this invention are water soluble, have the ability to readily chelate undesirable heavy metals which are easily removable from aqueous systems.

The invention comprises a water soluble ethylene dichloride ammonia polymer having a molecular weight of from 500 to 10,000 (as determined by liquid chromatography and polyethylene glycol standard) which contains from 5 to 50 mole % of dithiocarbamate salt groups. The invention also comprises the use of these polymers, and methods for removing heavy metals from waters containing these metals.

### THE ETHYLENEDICHLORIDE-AMMONIA POLYMERS

These polymers are prepared by the reaction of ethylene dichloride and ammonia. A typical reaction for producing these polymers will be illustrated hereafter. The starting ethylene dichloride ammonia polymers generally have a molecular weight range of 500 - 100,000. In a preferred embodiment the molecular weight is 1,500 to 10,000, with a most preferred molecular weight range being 1,500 - 5,000. To illustrate the preparation of such polymers, Example 1 is presented below.

### EXAMPLE 1

To a pressure reactor were charged 10.8 weight % aqueous ammonia, 7.7 weight % anhydrous ammonia, 2.3 weight % water and 0.3 weight % EDTA. The reactor was sealed and heated to 115-130°C and the Ethylene Dichloride (EDC) was pumped in. After the addition of about 0.5 weight % of EDC, 50% sodium hydroxide was added at about the same rate as the EDC and the additions were completed in 4.5 hours. Samples during the reactant addition were obtained. These samples were then concentrated under reduced pressure to remove residual EDC, NH₃ and vinyl chloride which is a byproduct of the reaction. Weight average molecular weights of the polymers were then measured using a liquid chromatography method and polyethylene glycol standards. A series of polymers were prepared with their make-up and properties being set forth in Table 1.

**TABLE 1**

| Sample # | Wt%EDC | Wt%NaOH | Mw | Mn | Poly-Dispersity | Polymer Solids |
|---|---|---|---|---|---|---|
| 1 | 12.9 | 10.4 | 1380 | 1010 | 1.3 | 41.2 |
| 2 | 15.4 | 12.3 | 1620 | 1100 | 1.5 | 46.4 |
| 3 | 17.5 | 15.2 | 1670 | 1100 | 1.5 | 41.9 |
| 4 | 20.2 | 19.3 | 1850 | 1290 | 1.6 | 43.1 |
| 5 | 22.3 | 23.1 | 2320 | 1290 | 1.8 | 37.8 |
| 6 | 24.7 | 25.7 | 2970 | 1440 | 2.0 | 47.1 |
| 7 | 26.7 | 27.4 | 3470 | 1540 | 2.2 | 41.5 |
| 8 | 29.2 | 29.2 | 4420 | 1700 | 2.6 | 42.5 |
| 9 | 32.1 | 32.8 | 6040 | 1910 | 3.1 | 37.9 |
| 10 | 33.8 | 34.6 | 7970 | 1910 | 4.2 | 36.5 |
| 11 | 36.3 | 42.6 | 92,100 | 2600 | 35.0 | 35.0 |

### POLYMER MODIFICATION WITH CARBON DISULFIDE

The reaction of polyamines or polyimines with carbon disulfide to produce dithiocarbamates or their salts is well known. Such reactions are described with specificity in U.S. 4,731,187 which is incorporated herein by reference. The reaction between polyamines and carbon disulfide is preferably conducted in a solvent, such as water or alcohol. The reaction goes smoothly between the temperature of ranges of 30 -100°C for periods of time ranging between 1 and 10 hours. Good conversions are achieved when the temperature is between 40-70°C for 2 to 5 hours. These general reaction conditions apply to modifying the ethylene dichloride ammonium polymers described previously.

The mole % of dithiocarbamate salt groups placed in the finished polymer, generally is within the range of 5 to 50 mole %. The preferred range is 20-40 mole %, with a most preferred range being about 25-35 mole %.

To illustrate the conversion of the ethylene dichloride polymers to dithiocarbamate salt groups, Example 2 is presented below.

### EXAMPLE 2

To 82 gm of an EDC/NH₃ polymer were added 38 gm of 50% sodium hydroxide and 41 gm of D.I. water. The mixture was placed in a pressure reactor and 14 gm of carbon disulfide were added. The mixture was heated to 45-50°C for three hours. After the three hours reaction time, the mixture was cooled and a vacuum applied for 5 minutes to remove any residual carbon disulfide. The resulting solution product contained 30% modified polymer.

Using this preparative technique, the following modified polymers were prepared: (See Table 2)

**TABLE 2**

| Example | MW | Wt% Polymer | Wt% CS₂ | Mole% CS₂ | Wt% 50%NaOH | Comments Rxn Product |
|---|---|---|---|---|---|---|
| A | 2970 | 22.1 | 8.0 | 21 | 21.7 | Soluble |
| B | 2970 | 20.9 | 9.7 | 26 | 20.5 | Soluble |
| C | 2970 | 18.0 | 11.1 | 35 | 22.3 | Soluble |
| D | 3470 | 20.6 | 9.6 | 26 | 20.2 | Soluble |
| E | 3420 | 18.9 | 11.7 | 35 | 18.5 | Soluble |
| F | 4400 | 20.1 | 9.4 | 26 | 25.0 | Insoluble |
| G | 4092 | 22.0 | 8.0 | 21 | 17.1 | Insoluble |
| H | 4096 | 22.0 | 8.0 | 10 | 17.1 | Soluble |
| I | 1850 | 20.6 | 4.0 | 21 | 21.1 | Soluble |

As molecular weight increases the amount of carbon disulfide which can be reacted to form a water soluble reaction product decreases. With less than about 20 mole % CS₂, in the polymer metal removal efficiency decreases.

### DOSAGE

The amount of the modified polymers of the invention that are capable of effectively removing metals from contaminated waters is generally within the range of 0.5 to 3 moles of polymer per mole of heavy metal contained in the water to be treated. Generally 1 to 1.5 moles of the polymer, per mole of heavy metal contained in the water give excellent results. The dosage may be expressed in another form e.g., between 3-10 ml of a 0.3% polymer active solution per mole of heavy metal in the water will produce satisfactory metal removal and allow such complexes formed to be self flocculating; e.g. they quickly settle and are easily separated from the treated water.

### EXAMPLE 3

To illustrate the ability of the carbamate polymers set forth in Table 2 to effectively chelate and remove copper metal from a water supply, the following data is presented in Table 3:

**TABLE 3**

| Polymer Table 2 | Equal Actives Dosage (ml) | | | | | | Observed Filtration Rate |
|---|---|---|---|---|---|---|---|
| | 0 | 2 | 3 | 4 | 5 | 6 | |
| A | 20 | - | 1.1 | 0.09 | 0.05 | - | Fast |
| B | 20 | 3.9 | 0.2 | 0.07 | 0.07 | 0.05 | Fast |
| C | 20 | 3.1 | 0.2 | 0.06 | 0.05 | 0.05 | Fast |
| D | 20 | 3.4 | 0.1 | 0.06 | 0.04 | 0.04 | Fast |
| E | 20 | 2.2 | 0.11 | 0.06 | 0.06 | 0.06 | Fast |
| D | 20 | - | 0.14 | 0.08 | 0.08 | - | Slow |

It should be noted that the observed filtration rate was fast.

### ADVANTAGES OF THE INVENTION

1. The EDC/NH₃ polymers can be derivitized with CS₂ under mild conditions to form water soluble polymeric dithiocarbamate polymers.
2. The polymeric dithiocarbamates can chelate and precipitate heavy metals from waste water faster than DMDTC (small molecules). This is evident from the fast formation of precipitate.
3. In addition to good chelation ability of the polymeric dithiocarbamates, the precipitate formed is larger than that produced by DMDTC, and settles very quickly. Because the precipitate is large, there is little need for coagulants or flocculants to aid in settling. Therefore, the polymeric dithiocarbamate of this invention can be a one product, one step treatment chemical for removing heavy metals from waste waters.

## Claims

1. A water soluble ethylene dichloride ammonia polymer having a molecular weight of from 500 to 100,000 which contains from 5 to 50 mole % of dithiocarbamate salt groups.

2. A water soluble ethylene dichloride ammonia polymer according to claim 1 having a molecular weight from 1500 to 10,000 and containing from 15 to 50 mole % of dithiocarbamate salt groups.

3. The water soluble ethylene dichloride ammonia polymer according to claim 2 having a molecular weight from 1500 to 5000 and containing from 25-40% of dithiocarbamate salt groups.

4. A method of removing heavy metals from waters containing these metals which comprises the steps of:
(a) treating such waters with a water soluble polymer of claim 1, claim 2 or claim 3 to form a complex of these heavy metals;
(b) allowing such complexes to settle from the water as a precipitate; and
(c) separating the precipitate from the water.

5. The use of a polymer according to any one of claims 1 to 3 for the removal of heavy metal from water.

## Patentansprüche

1. Wasserlösliches Ethylendichlorid-Ammoniak-Polymer mit einem Molekulargewicht von 500 bis 100.000, das 5 bis 50 Mol-% Dithiocarbamat-Salzgruppen enthält.

2. Wasserlösliches Ethylendichlorid-Ammoniak-Polymer nach Anspruch 1 mit einem Molekulargewicht von 1500 bis 10.000, das 15 bis 50 Mol-% Dithiocarbamat-Salzgruppen enthält.

3. Wasserlösliches Ethylendichlorid-Ammoniak-Polymer nach Anspruch 2 mit einem Molekulargewicht von 1500 bis 5000, das 25 bis 40 Mol-% Dithiocarbamat-Salzgruppen enthält.

4. Verfahren zur Entfernung von Schwermetallen aus diese Metalle enthaltenden Wässern, umfassend die folgenden Schritte:
(a) Behandlung solcher Wässer mit einem wasserlöslichen Polymer nach Anspruch 1, 2 oder 3 zur Bildung eines Komplexes dieser Schwermetalle;
(b) Absetzenlassen solcher Komplexe aus dem Wasser als Niederschlag; und
(c) Abtrennen des Niederschlags vom Wasser.

5. Verwendung eines Polymers nach einem der Ansprüche 1 bis 3 zur Entfernung von Schwermetall aus Wasser.

## Revendications

1. Polymère d'ammoniac dichlorure d'éthylène soluble dans l'eau ayant un poids moléculaire de 500 à 100 000 qui contient 5 à 50 moles% de groupes de sels de dithiocarbamates.

2. Polymère d'ammoniac dichlorure d'éthylène soluble dans l'eau selon la revendication 1 ayant un poids moléculaire de 1500 à 10 000 et contenant 15 à 50 moles% de groupes de sels de dithiocarbamates.

3. Polymère d'ammoniac dichlorure d'éthylène soluble dans l'eau selon la revendication 2 ayant un poids moléculaire de 1500 à 5000 et contenant 25 à 40% de groupes de sels de dithiocarbamates.

4. Méthode pour retirer les métaux lourds d'eaux contenant ces métaux qui comprend les étapes consistant en:
(a) traiter de telles eaux avec un polymère soluble dans l'eau de la revendication 1, la revendication 2 ou la revendication 3 pour former un complexe de ces métaux lourds;
(b) permettre à de tels complexes de se décanter de l'eau comme précipité; et
(c) séparer le précipité de l'eau.

5. Utilisation d'un polymère selon l'une quelconque des revendications 1 à 3 pour la suppression de métal lourd dans l'eau.
